**Europäisches Patentamt**

**European Patent Office**

**Office européen des brevets**

(19)

(11) Veröffentlichungsnummer: **0 151 265**
**B1**

(12)

# EUROPÄISCHE PATENTSCHRIFT

(45) Veröffentlichungstag der Patentschrift:
**18.05.88**

(21) Anmeldenummer: **84115001.4**

(22) Anmeldetag: **08.12.84**

(51) Int. Cl.⁴: **F 16 L 59/00,** E 04 H 1/12,
E 04 F 13/00, B 63 B 25/16

(54) **Isolierte Hohlkammerwand.**

(30) Priorität: **01.02.84 DE 8402846 U**

(43) Veröffentlichungstag der Anmeldung:
**14.08.85 Patentblatt 85/33**

(45) Bekanntmachung des Hinweises auf die Patenterteilung:
**18.05.88 Patentblatt 88/20**

(84) Benannte Vertragsstaaten:
**BE DE FR GB NL**

(56) Entgegenhaltungen:
**EP-A-0 064 886**
**GB-A-2 115 532**

(73) Patentinhaber: **Messerschmitt- Bölkow- Blohm
Gesellschaft mit beschränkter Haftung, Robert-
Koch- Strasse, D-8012 Ottobrunn (DE)**

(72) Erfinder: **Hohmann, Claus, Merianstrasse 16,
D-8850 Donauwörth (DE)**

## Beschreibung

Die Erfindung bezieht sich auf eine Isolierte Hohlkammerwand entsprechend dem Gattungsbegriff des Anspruchs 1.

Eine derartige Isolierung ist bereits durch die GB-A-2 115 532 bekannt, bei der als Hohlkammern ausgebildete Rahmenplatten auf die Wände eines Apparates für die kombinierte Erzeugung von elektrischer Energie und Wärme aufgesetzt sind. Die Rahmenplatten sind mit den Metallwänden des Apparates mittels Schrauben und Muttern verbunden, die innerhalb der Rahmenplatten mit nicht isolierten Führungsbuchsen geführt sind. Die Hohlkammern der Rahmenplatten sind mit einem Isoliermaterial ausgefüllt. Bei dieser Anordnung entstehen zwischen der Apparatewand, den Führungsbuchsen, den Muttern und Schrauben sowie der äußeren Abdeckung der Hohlkammern Schall- und Wärmebrücken, welche die Isolierung beeinträchtigen. Ein weiterer Nachteil besteht darin, daß das in den Hohlkammern eingeschlossene Isoliermaterial zu Schwitzwasserbildung neigt, wodurch die Wärmeleitfähigkeit des Isoliermaterials erhöht wird.

Der Erfindung liegt die Aufgabe zugrunde, eine isolierte Hohlkammerwand der gattungsgemäßen Art zu schaffen, die durch ihren Aufbau eine gleichbleibende Isolierwirkung mit niedrigem Wärmedurchgang erzielt.

Diese Aufgabe ist gemäß dem Kennzeichen des Patentanspruchs 1 gelöst. Vorteilhafte Ausgestaltungen der Erfindung sind in den Unteransprüchen 2 bis 4 gekennzeichnet.

Der Wesentliche Vorteil der Erfindung besteht darin, daß mit Hilfe der außen auf die Hohlkammerwand aufgebrachten Isolierung eine äußerst niedrige Wärmedurchgangszahl für die gesamte Hohlkammerwand-Anordnung erzielt wird und eine Schwitzwasserbildung für die Isolierung unmöglich ist. Eine Ausführung der Isolierung bei einer Hohlkammerwand aus 35 mm Aluminium-Hohlkammerprofilen mit einem 3 mm schäumenden Haftkleber, einer Kunststoff-Schaumschicht von 20 mm und einer inneren Preßspanplatte von 2,5 mm ergab die niedrige Wärmedurchgangszahl k = 1,1. Die erfindungsgemäße Isolierung ist vielseitig anwendbar und einfach durchzuführen.

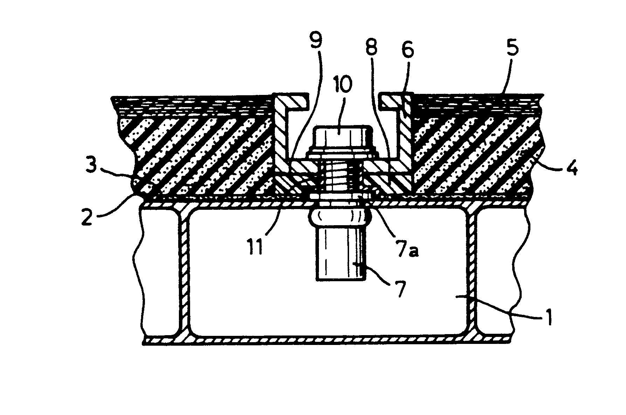

Die in der Zeichnung dargestellte einzige Figur zeigt ein Ausführungsbeispiel, bei der die Isolierung auf einer Hohlkammerwand 1 aus Aluminium-Preßprofilen aufgebracht ist. Zur Vorbereitung der Isolierung ist auf der Hohlkammerwand 1 eine Haftgrundierung 2 und auf dieser ein Kleber 3, z. B. ein schäumender Polyurethankleber, aufgebracht. Auf letzterem ist eine Isolierschicht 4, z. B. aus Polyurethanschaum, aufgeklebt. Zur Versteifung ist als Abschluß eine Preßspanplatte 5 geklebt. Auf der Preßspanplatte können wahlweise andere Materialien aufgebracht werden, z. B. ein Fußbodenbelag,Deckanstrich usw. Zum Einsetzen eines Verstärkungsprofils 6 ist die vorstehend beschriebene Isolierung entweder in Breite des Profils ausgeschnitten oder das Profil wird zuerst aufgebracht und danach wird die Isolierung zwischen den Profilen aufgeklebt. Vor dem Aufbringen der Verstärkungsprofile 6 werden Blind-Einnietmuttern 7 in die Hohlkammerwand 1 eingesetzt, danach werden feste isolierende Leisten 8, z. B. aus Polyamid, aufgebracht. Darauf kommen noch vor dem Aufsetzen der Verstärkungsprofile 6 Isolieranstriche 9. Schrauben 10 werden zum Schluß in die Einnietmuttern 7 eingeschraubt. Zur noch besseren Isolierung und zur Verhinderung, daß Bunde 7a der Einnietmuttern 7 und die Schrauben 10 als Wärmebrücken dienen, können letztere eine Kunststoff-Ummantelung 11 haben. An Stelle von C-Profilen 6 können auch andere Profile, z. B. U-Profile oder L-Profile, verwendet werden.

## Patentansprüche

1. Isolierte Hohlkammerwand dadurch gekennzeichnet, daß auf einer Seite der Hohlkammerhand (1) eine Isolierschicht (4) aufgebracht ist, in die auf isolierenden Leisten (8) aufliegende, an Blind-Einnietmuttern (7) angeschraubte Verstärkungsprofile (6) eingelassen sind.

2. Isolierte Hohlkammerwand nach Anspruch 1, dadurch gekennzeichnet, daß die Isolierschicht (4) aus einem Kunststoffschaum besteht, der auf die Hohlkammerwand mit einem Kleber (3), insbesondere einem schäumenden Kunststoffkleber aufgeklebt ist, und der mit einer versteifenden Deckplatte (5) versehen ist.

3. Isolierte Hohlkammerwand nach Anspruch 1, dadurch gekennzeichnet, daß die isolierende Leiste (8) aus Kunststoff besteht.

4. Isolierte Hohlkammerwand nach den Ansprüchen 1 bis 3, dadurch gekennzeichnet, daß auf der Hohlkammerwand (1) aufliegende Bunde (7a) der Blind-Einnietmuttern (7) und die Schäfte der in die Muttern eingesetzten Schrauben (10) mit einer isolierenden Ummantelung (11) versehen sind.

## Claims

1. Insulated hollow-chamber wall, characterised in that an insulating layer (4), into which reinforcing profiles (6) resting on insulating strips (8) and bolted onto blind rivetted nuts (7) are inset, is applied to one side of the wall (1) of the hollow chamber.

2. Insulated hollow-chamber wall according to claim 1, characterised in that the insulating layer (4) consists of a plastics foam which is bonded onto the wall of the hollow chamber with an adhesive (30), more especially a foaming plastics adhesive, and which is provided with a stiffening cover plate (5).

3. Insulated hollow-chamber wall according to claim 1, characterised in that the insulating strip (8) consists of plastics material.

4. Insulated hollow-chamber wall according to claims 1 to 3, characterised in that collars (7a), resting on the wall (1) of the hollow chamber, of the blind rivetted nuts (7) and the shafts of bolts (10) inserted into the nuts are provided with an insulating sheath (11).

**Revendications**

1. Paroi creuse isolée, caractérisée en ce que sur un côté de la paroi creuse (1) est appliquée une couche isolante (4) dans laquelle sont enchâssés des profilés (6) de renfort, reposant sur des baguettes isolantes (8) et fixés par vis à des écrous (7) à fixation par rivetage aveugle.

2. Paroi creuse isolée conforme à la revendication 1, caractérisée en ce que la couche isolante (4) est constituée d'une mousse de matière plastique qui est collée sur la paroi creuse avec une colle (3), en particulier une colle plastique moussante, et qui est munie d'un revêtement rigidifiant (5).

3. Paroi creuse isolée conforme à la revendication 1, caractérisée en ce que les baguettes isolantes (8) sont constituées de matière plastique.

4. Paroi creuse isolée conforme aux revendications 1 à 3, caractérisée en ce que les collets (7a) des écrous (7) à fixation à rivetage aveugle, reposant sur la paroi creuse (1), et les tiges des vis (10) engagées dans les écrous sont munis d'un gainage isolant (11).